# EUROPEAN PATENT SPECIFICATION

(11) **EP 2 126 177 B1**
(45) Date of publication and mention of the grant of the patent: **16.03.2011**
(21) Application number: 08720220.6
(22) Date of filing: 29.01.2008
(51) Int. Cl.: D04H 3/02

(54) **MULTI-WEB TYPE NON-WOVEN ARTICLE AND RELATIVE MANUFACTURING PROCESS**
MEHRBAHNIGER VLIESARTIKEL UND ENTSPRECHENDES HERSTELLUNGSVERFAHREN
ARTICLE NON TISSÉ DU TYPE À BANDES MULTIPLES ET PROCÉDÉ DE FABRICATION APPROPRIÉ

(30) Priority: 29.01.2007 IT BI20070001
(43) Date of publication of application: 02.12.2009
(73) Proprietor: Soft N.W. S.P.A, 13852 Cerreto Castello (BI) (IT)
(72) Inventor: PICCININO, Edoardo, I-13841 Bioglio (BI) (IT); PAPETTI, Ivan, I-24021 Albino (BG) (IT)
(86) International application number: PCT/IT2008/000052
(87) International publication number: WO 2008/093379

(56) References cited:
- EP-A- 1 598 453
- US-A- 4 865 899
- US-A1- 2004 156 679
- DATABASE WPI Week 198935 Thomson Scientific, London, GB; AN 1989-254364 XP002485072 KONTS K.H.O.; SAARMETS A.A.; VALTER L.I.: & SU 1 460 098 A (TALL MISTRA NONWOVEN) 23 February 1989 (1989-02-23)

## Description

### Technical Field

This invention relates generally to the sector of textile articles made with a non-woven fabric, and more closely it relates to a textile article made of a plurality of non-woven webs joined together along the side edges.

The invention also relates to a corresponding process for the manufacture of a multi-web type non-woven article.

### Background art

It is known that a wide range of articles may be made starting from a web or sheet made from what is known as a non-woven fabric, also called simply non-woven for conciseness, i.e. from a web or sheet formed of textile fibres and/or filaments held together and consolidated among one another in a variety of ways and through the effect of various treatments, whereby such web or sheet in certain aspects, and at least for its generically fibrous and/or filamentary structure, may be compared to a traditional fabric, even though it does not reproduce, as the very term "non-woven" would indicate, the latter-named's specific and typical, structure resulting from a weaving operation which - as is well-known - consists of single threads divided into warp threads and weft threads, reciprocally intertwined.

The non-woven web or sheet is generally produced to a given width and continuously on specific machines, operating according to various technologies and processes.

In general, these machines are characterized by having high level productivity and can be fed either with the same fibres as are intended to form the non-woven, or with a base material, generally a polymer, that will undergo treatments as it advances through the machine which will transform it into the fibres and/or filaments that the non-woven fabric is made from.

Again various different techniques may be used to produce the cohesion and consolidation between the fibres and the filaments that form the non-woven fabric.

For instance the fibres may be cohesed and compacted mechanically, with machines such as needle-punches that operate mechanically with a plurality of needles on a starting web in such a way as to break down the orientation of the fibres that it is formed of so as to intertwine them reciprocally and form the final compact web.

Or the fibres may be cohesed by means of thermal or chemical processes, or with the aid of adhesive substances, or with still other systems, the details of which we will not bother to describe here as they are widely known throughout the sector.

One general technical problem which is common to both the production of a non-woven web and to the manufacture of articles that use such a web is that of making webs of uniform thickness and characteristics and quality over their surface extension.

As for their applications, both the non-woven webs and the corresponding articles, in consideration of the possibility of producing them in large quantities and extensions at relatively low cost, are applied to advantage in many sectors, for instance for making so-called "geotextile" products intended for the restoration and covering of land with a broad surface area, for example roads, or in agriculture for covering and protecting extensive cultivated surfaces.

In particular these textile articles, also called multi-web, widely used nowadays to cover extensive surface areas, are made by joining or splicing together along respective edges various webs or sheets of a non-woven.

The joints or splicings by which the various non-woven webs are joined along respective edges thereby forming the multi-web article may be made in many ways and with different techniques, depending also on the material that the webs are made of and their structure, for instance simply thermally and/or by pressure, i.e. by heating and/or pressing one against the other the edges of the two webs to be joined, or through the use of glues and adhesive substances, or in yet another way.

Unfortunately these multi-web type articles often have the drawback that the splicings between the respective webs are insufficiently resistant, that is they are weak and therefore liable to break and split, if subjected to traction forces beyond a certain point, thus limiting the application and convenience of these multi-web articles, at least in certain areas.

Solutions have also been devised to reinforce at least the lateral external edges, often subject to the manual grip of users, of these multi-web articles, by applying continuously along these a supplementary strip of non-woven or other type.

However these measures, which in any event fail to solve the problem of having joints between the various webs that are potentially weak and liable to break up, imply an additional operation and therefore a certain increase in the final cost of the multi-web article.

The problems set out above are also related to that more general problem, much discussed in the non-woven sector, of producing multi-web articles intended to cover extensive surface areas which, in addition to being resistant, are also practical to handle and have the lowest manufacturing costs possible.

It is also known from document WO 03/037617 A1 how to make a single sheet web of a non-woven, in particular of the type made of fibres compacted in a needle-punching mechanical operation, that has a greater density of material, i.e. of weight of fibres per unit of area, on the lateral edges, and a lesser density of material in the centre, where this different density over the width of the web is obtained by feeding, in the web manufacturing machinery, a greater quantity of fibres in the areas corresponding to the edges, and a lesser quantity of fibres in the area corresponding to the centre of the web.

This document however does not make any mention of the possibility of making a multi-web textile product by joining together various webs of the type indicated above, that is a product made of webs that each have a significant nonuniformity of material density over their width; nor likewise does it make any mention of the earlier mentioned technical problem, raised by the poor resistance of the splicings between the sheets side by side that make up a multi-web article.

From document SU 1 460 098 A1 (respective abstract on database WPI Week 198935 Derwent Publications Ltd.; AN 254364 XP002485072) it is known a geotextile web which is made of a plurality of webs or sheets that are joined each other by their sides, wherein the edges of each base web or sheet are reinforced by attaching to them, by a double needle punching operation, binding elements made of a strip of thermoplastic filaments.

However even this multi-web non-woven article appears to require further improvements, namely in order to reduce the respective manufacturing costs.

### Disclosure of invention

Accordingly one object that this invention aims to achieve is that of producing a textile article made from a plurality of sheets of non-woven, intended for covering broad surface areas, for example but not exclusively in agriculture, which generally possesses better characteristics and performance than the articles currently used, together with a low cost, and more particularly has greater resistance and tenacity when handled and spread over a surface to be covered.

This object may be considered to be achieved in full by the textile article of the multi-web non-woven type, as defined by the combination of characteristics set out in the first main independent claim, comprising:
a plurality of sheets of non-woven of a given material joined together to form the article,
wherein the sheets have a greater density of material at the edges compared with the centre of each sheet, and the joints between the sheets are made along the respective edges with higher material density.

Particular embodiments of the invention are also defined by the dependent claims.

The multi-web non-woven textile article thus claimed and proposed by this invention has numerous advantages, for example that of being considerably more robust and tenacious than similar articles and/or products already available on the market, also designed to cover wide surface areas, or that of implying simple and easily implementable modifications of the existing machinery in order to produce the non-woven webs it is made of, which also implies a very low final manufacturing cost.

These and other objects, characteristics and advantages of this invention will become clear and apparent from the following description of a preferred embodiment, provided by way of non-restrictive example and with reference to the accompanying drawings.

### Brief description of drawings

Fig. 1 is a perspective view of a textile article of the non-woven multi-web type according to this invention, represented in an outspread configuration;
Fig. 2 is a section view along the line II-II of the textile article of Fig. 1;
Fig. 3 is a partial, schematic view of a plant for the production of webs of non-woven intended for manufacturing of the article of Fig. 1;
Fig. 4 is a frontal schematic view of a drawing station in the plant of Fig. 3;
Fig. 5 is a partial, schematic view from above of the plant of Fig. 3 and of the spinning station of Fig. 4;
Fig. 6 is a transversal section view of a typical web of non-woven produced on the plant of Fig. 3;
Fig. 7 is a diagram representing qualitatively the variation in density of material in the web of Fig. 6, across its width;
Fig. 8 is a schematic view of apparatus for joining along the edges and making according to an accordion type configuration a plurality of webs produced on the plant of Fig. 3, thus producing the multi-web textile article of this invention;
Fig. 8a schematically illustrates the joining operation, between two overlaid webs, carried out on the apparatus of Fig. 8;
Fig. 9 is a section view that shows the multi-web textile article according to this invention in the accordion-like configuration obtained with the apparatus of Fig. 8; and
Figs. 10a and 10b are schematic views showing the multi-web textile article of this invention in use covering a surface.

### Best mode for carrying out the invention

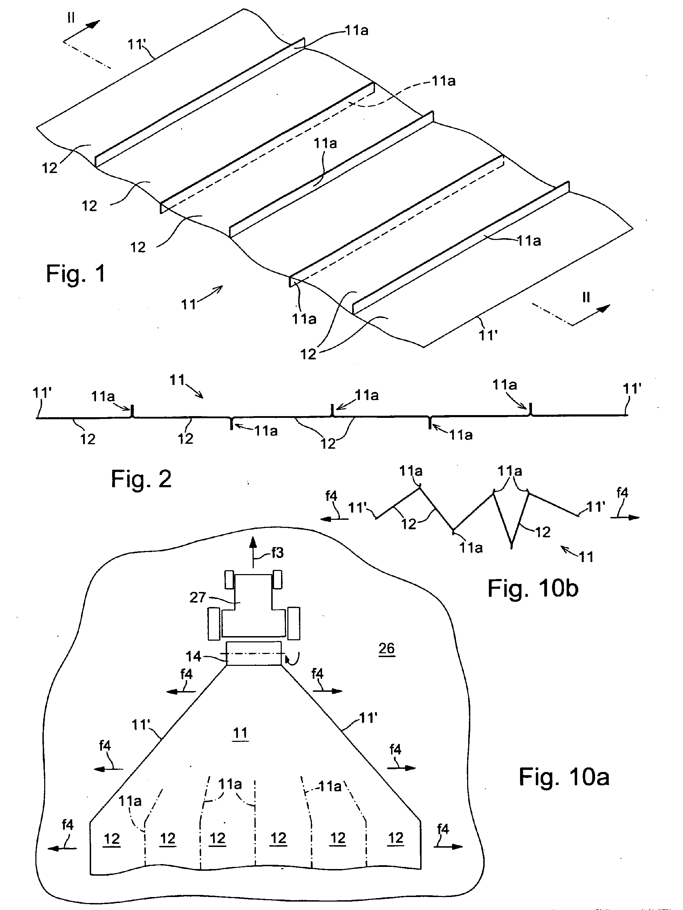

Figs. 1 and 2 represent in perspective and section views respectively a textile article, generically indicated with numeral 11, made in accordance with this invention, of the multi-web type, i.e. made of a plurality of webs, each indicated with numeral 12, of a non-woven.

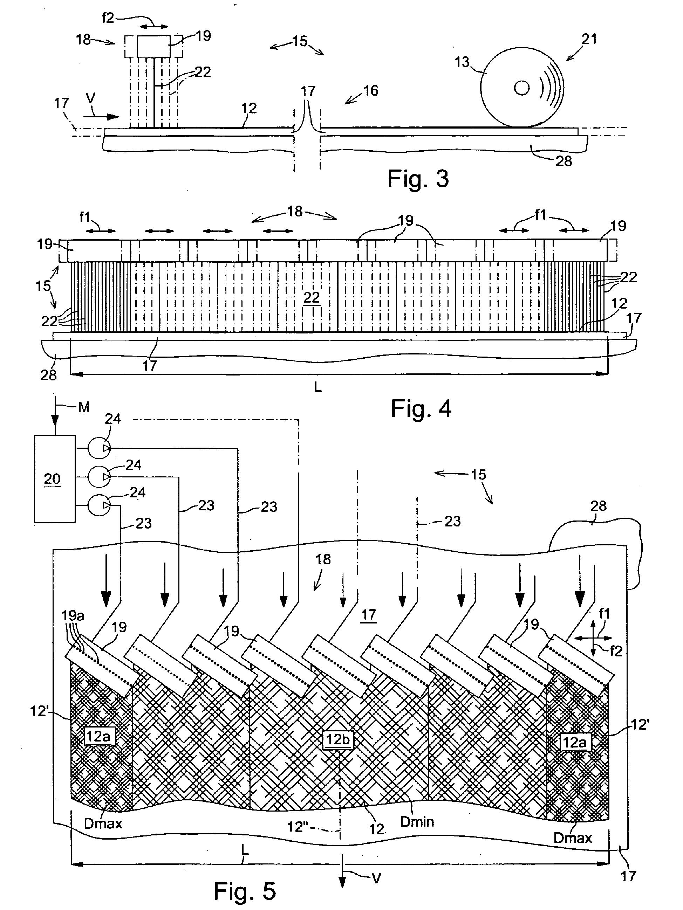

The different webs 12, also called tapes or sheets, of the non-woven which are used to make the textile article 11, as described later in detail, are made individually on a plant, indicated generically with numeral 15, through a corresponding production process and according to arrangements that will now be described with reference to Figs. 3-5.

In particular the production plant 15, the minor details of which will be omitted as they are widely known to those acquainted with the sector art and do not closely relate to the invention, is of a type suitable for producing a web of non-woven in a process of the type known commonly as "spunbond", in which the web of non-woven is made directly in a single production process starting from a base material consisting of a polymer or resin, usually in ball form, which is melted and "spun" in suitable spinning stations to form a plurality of continuous filaments which, once formed, are cooled and spread out on a continuously advancing conveyor belt and in which these filaments are subsequently consolidated and bound together in different ways during a consolidation or "bonding" step, in particular thermally and/or by pressure effect, or by using adhesive substances or even other systems, in order to form a final cohesed and compact web.

In detail the plant 15 on which such a spunbond process for production of the non-woven web 12 is achieved comprises:
a feeding and transforming unit 20, arranged for feeding with the base chemical material M, generally consisting of a polymer or resin in ball or solid granulate form, and for transforming the fed in solid granulate into a fluid mass suitable for the following operation of spinning or drawing;
a drawing or spinning station 18, in tum including a plurality of drawing or spinning dies or heads 19 suitable for receiving from the feeding and transforming unit 20 the base material M in fluid form and for drawing it into continuous filament form;
a conveyor line 16, associated with the drawing station 18 and including a conveyor belt 17 provided for advancing at a speed V on a fixed structure 28 of the plant 15; and
an output station 21 for collecting the web or tape 12 of non-woven produced on the plant 15.

The single dies 19 are connected to the unit 20 through respective feeding lines 23, each of which in tum associated with a pump 24 the function of which is to control and regulate the flow of material M in fluid form from the unit 20 to the corresponding die 19 of the drawing station 18.

Each of the die 19 in tum comprises a plurality of nozzles or capillaries 19a through which the base material M in fluid form received from the feeding and transforming unit 20, is drawn or spun in such a way as to form a plurality of corresponding continuous filaments 22.

In the drawing station 18, these dies 19 are arranged one beside the other, above the conveyor belt 17, in such a way that their nozzles 19a overall define a continuous array of nozzles 19a, oriented transversally with respect to the conveyor belt 17 and therefore suitable for traversing it width-wise.

In the plant 15, the web 12 of non-woven is made by causing to fall from above and depositing continuously on the conveyor belt 17, as it advances at the constant speed V, the continuous filaments 22 drawn and supplied by the nozzles 19a of the dies 19, so that the continuous filaments 22 falling from the respective nozzles 19a form a kind of a curtain of filaments that drops continuously and is deposited on the conveyor belt 17 as it advances.

In addition the dies 19 are suitably commanded as to move alternatively in the transversal direction, i.e. along the width, and in the longitudinal direction, i.e. parallel to the feeding direction of the belt 17, as indicated by respective arrows f1 and f2 and with the dot and dash line, so that the adjacent filaments 22 overlap with one another at random and produce a layer, having an isotropic structure, which continuously covers the surface of the conveyor belt 17.

Indicatively, the order of magnitude of the total number of filaments 22 that are produced in the drawing station 18 to be deposited and thus form the web 12 on the conveyor belt 17 may be inferred from the fact that the number of capillary nozzles 19a, and hence of the corresponding filaments, may for instance be 1,000 approximately or even higher, for each die 19, with a total number of dies 19 present in the drawing station 18 of - for instance - 24, so that the total number of filaments 22 produced may be 24,000 or even more.

The filaments 22 thus deposited on the conveyor belt 17 as it moves forward are subsequently fixed, for instance thermally, in a fixing station not depicted in the drawings, in order to consolidate and give a structural consistency to the web of non-woven 12 produced on the plant 15.

The web 12 of non-woven is finally collected in a known way in correspondence with the collecting station 21, where for instance it is wound into a roll 13.

According to one essential characteristic of this invention, the web 12 used for making the multi-web article 11 has, or rather is produced on the plant 15 so as to have, a greater density D of material M per unit of surface in the lateral areas 12a adjacent to the respective edges, indicated with 12', as compared with the central area 12b arranged in correspondence with the centre line, indicated with 12", of the same web 12.

For this purpose the drawing heads 19 of the drawing station 18, arranged above and in correspondence with the lateral areas of the conveyor belt 17 and therefore with the edge zones 12a of the web 12 are fed, in a unit of time, with a greater quantity of base material M compared with the drawing heads 19 arranged above and in correspondence with the central area of the conveyor belt 17 and therefore also with the central zone 12b of the web 12.

For example, this may quite easily be obtained by suitably controlling the feeding and the flow of material M in fluid form through the lines 23 that connect the unit 20 to the single dies 19 of the drawing station 18, i.e. by regulating the flow from the pumps 24 and thus by causing the pumps 24 associated with the lines 23 feeding the dies 19 arranged to the sides of the conveyor belt 17 to pump more material than the pumps 24 associated with the lines 23 feeding the dies 19 arranged in the centre of the conveyor belt 17.

For clarity's sake, in Fig. 5 the arrows representing the flow and the quantity of material M fed per unit of time to the different dies 19 along the corresponding feeding lines 23 are represented in different sizes, and in particular are larger for the dies 19 arranged above the lateral zones than those arranged above the central zone of the conveyor belt 17.

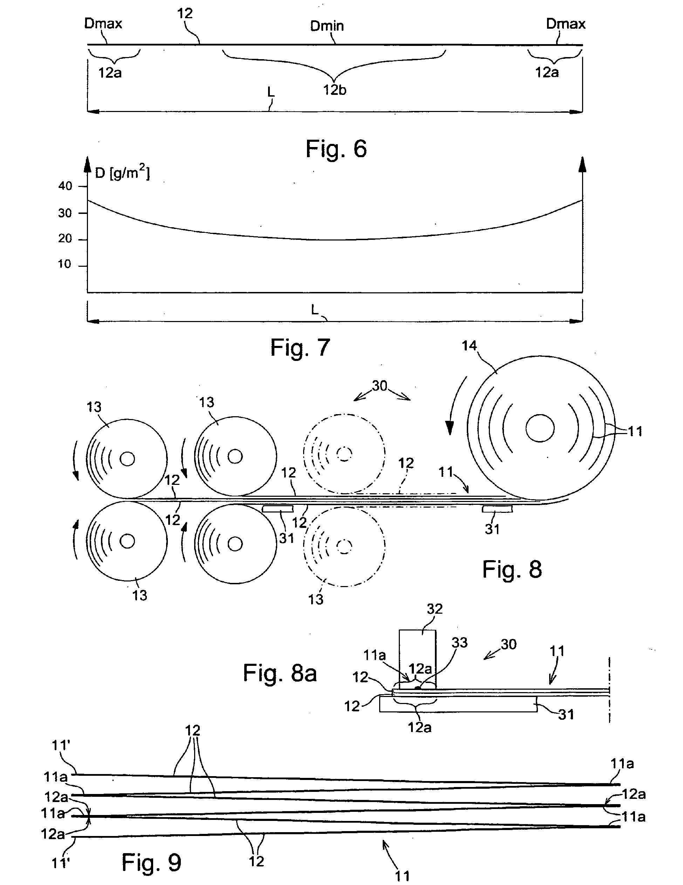

Fig. 6 and Fig. 7 represent respectively the web 12 which is obtained in this way, in transversal section, i.e. with the lateral portions 12a, close to the edges 12', which have a greater density D of material than the central portion 12b, and a diagram which depicts in terms of quality the variation in density D of material over the width L of the web 12.

By way of example, a web 12 obtained in the way described above is made of a base material M consisting of polypropylene, and has preferably in its central area 12b a minimum density Dmin of between 15 and 25 g/m² (grams per square metre), and in the edge zones 12a a maximum density Dmax of material between 20 and 35 g/m², i.e. at least approximately 30% greater than that in the centre, according to the following indicative table of correspondence:

| Density Dmax of material in the edge areas [g/m²] | Density Dmin of material in the centre area [g/m²] |
|---|---|
| 20 | 15 |
| 25 | 20 |
| 30 ÷ 35 | 22 ÷ 25 |
| 40 | 30 |

Naturally other compositions, also based on polypropylene, or other types of materials and/or resins and/or polymers, in combination with other values of material density per unit of surface area, with respect to those indicated above, may be used to produce the web 12 without departing from the scope of this invention.

For instance the base material polypropylene, apart from being used in pure form may be associated with additive substances having UV (UltraViolet) light stabilizing properties, in order to prevent the web 12 from discolouring in time.

The rolls 13 of tape of non-woven 12, produced on the plant 15, are subsequently transferred to a splicing or joining machine 30 (Fig. 8), where the respective webs 12 are joined to form the multi-web article 11.

In particular, in such a machine 30, the various sheets 12 are unwound from their respective rolls 13 and are spread on a mobile conveyor belt 31, partially depicted in Fig. 8, so as to form a multiple sheet, made up of numerous overlapping webs 12, which advances towards a final roll 14, on which the multi-web article 11, once formed, is wound.

The various overlapping sheets 12 forming the multiple sheet are subjected, on the same machine 30 and while they advance towards the collection roll 14, to a joining operation, in which the edges 12a, belonging to two adjacent sheets 12 arranged one on top of the other in the multiple sheet, thus having a greater material density than at the centre of the respective sheet, are joined two by two and in a staggered way on the two opposite sides of the multiple sheet, so as to form the final multi-web article 11, which accordingly assumes in section, thanks to the effect of such a series of junctions among the edges of the single overlapping sheets, an accordion-like configuration as shown in Fig. 9.

For example, on the machine 30 and as shown schematically in Fig. 8a, the operation for joining two by two the edges of the overlapping sheets 12 forming the article 11 may be carried out by providing, in the joining area, a fine cord of material 33, for instance of molten polypropylene, i.e. the same material as the sheets 12 are made of, and then even calendering using a pressure roller 32, the cord of material 33 above the edges 12a of the two sheets 12 to be joined, as they advance towards the collection roller 14.

In this way the multi-web article 11 presents and defines a plurality of splices or joints indicated as 11a, between the adjacent edges 12a of the webs or sheets 12 that it is made of.

The multi-web article 11 thus formed, i.e. with the different sheets 12 joined accordion-like among one another, is then wound on the roII14.

The multi-web article 11 of this invention may for example consist of a number of non-woven webs varying from 2 to 9, or even more, in which the width of each single web is indicatively 3 metres.

Again, the joints 11 a between the sheets 12 of the article 11, on account of the fact that they are made along and between edges of web reinforced thanks to a greater density of material, assume an optimum resistance and tenacity to possible traction forces tending to split and/or break them.

In any case, for a like base material and grammature or average surface density of such material, these joints 11 a, typical of the article 11 of this invention, typically possess a resistance that is significantly greater than that of the joints or splicings found in similar articles already on the market, made between webs that on the other hand have a constant density width-wise.

Purely indicatively, a multi-web article 11, according to this invention, made of webs 12 of a base material such as polypropylene, each with in the centre a density of material, i.e. of polypropylene, of approx. 17 g/m² and with at the edges a density D of material of approx. 22 g/m², i.e. 30% greater than that in the centre of the sheet, has joints 11 a between the adjacent webs 12 that the article 11 is made of, reinforced at the edges thanks to this greater density of material, having a traction resistance of at least 30 N (Newton) along a 50 mm stretch of junction.

Conversely, i.e. without reinforced edges and for a like material, the resistance of the joints or splicings between the webs would not have been above 20 ÷ 25 N for a 50 mm stretch of junction.

The article 11, produced in this way, also has the advantage of good tenacity and resistance, which are very useful in various circumstances and in particular when the article is being laid on a surface, along its outer extremity edges, indicated with 11' in Fig. 1, not joined with other webs 12, thanks to the greater density D of material in the area of these edges 11'.

In the final usage, the multi-web textile article 11, packaged for instance in the form of a roll 14, as described earlier with reference to the machine 30, is unwound from the roll 14 and laid out on a surface to be covered.

Figs. 10a and 10b show, by way of example, a classical use of the invention in agriculture, in which the roll 14 formed by the article 11 is mounted on a tractor 27 moving along a field 26 as indicated by an arrow f3, while at the same time the article 11 is unwound from the roll 14 to cover said field 26.

For this purpose, as the tractor 27 moves, the article 11 is gripped and pulled manually towards the outside along its reinforced extremity edges 11' in such a way as to unfold from its accordion shape, as indicated by arrows f4 and shown more clearly in Fig. 10b, so that the multi-web article 11 is unfolded over its full extent, defined by the number of webs 12 that it is made of, in order to cover the field 26.

It is clear that the multi-web textile article and the relative manufacturing process described up to now may undergo developments and/or have further modifications and improvements made to them, without exiting from the scope of this invention.

## Claims

1. Multi-web type textile article (11), in particular for covering wide surface areas (26), comprising:
a plurality of webs or sheets (12) of a non-woven of a given material (M) joined together to form said article (11),
wherein said webs or sheets (12) possess a greater density (D, Dmax) of material (M) at the edges (12a) than in the centre of the web or sheet (12), and
the joints (11 a) between said webs or sheets (12) are made along said edges (12a) having said greater density (D) of material,
**characterized in that** each of the single webs or sheets (12) said textile article (11) is made of is produced, with all its portions (12a, 12b) including those (12a), at the edges of the web or sheet, having a greater density (D, Dmax) of material (M), by a continuous spunbond type process, by drawing in a corresponding drawing station (18) and depositing from above on a conveyor belt (17) that is in motion (V) a plurality of continuous filaments (22) of said material (M), and subsequently fixing the layer of filaments thus deposited.

2. Textile article (11) according to claim 1, wherein said filaments (22) as they are deposited from above on said conveyor belt are caused to move in both the longitudinal (f2) and the transversal (f1) directions with respect to the direction of motion (V) of said conveyor belt (17), so that they reciprocally overlap and are distributed casually on said conveyor belt (17).

3. Textile article (11) according to claims 1 or 2, wherein said material (M) is a resin or a polymer.

4. Textile article (11) according to claim 3, wherein said material (M) is polypropylene.

5. Textile article (11) according to one of the previous claims, wherein said webs or sheets (12) overlap one on the other and are joined together along the respective edges (12a) so as to form an accordion-like, extendable configuration for said article.

6. Textile article (11) according to one of the previous claims, wherein said greater density (Dmax) of material at the edges (12a) of each web or sheet (12) is between 20 and 35 g/m² and is at least 30% greater than that (Dmin) in the centre (12b) of the sheet (12).

7. Textile article (11) according to one of the previous claims, wherein the edges (12', 12a), with greater density of material, of the various webs or sheets (12) it is made of are joined by casting a fine cord of molten material on to the joining area (12a).

8. Multi-web type textile article (11) according to one of the previous claims, wherein the non-joined extremity edges (11') of said article also possess a greater density (D) of material (M) than in the centre of the relative web or sheet (12).

9. Process for manufacturing a multi-web, non-woven textile article (11) comprising the following steps:
- producing a plurality of webs or sheets (12) of non-woven each possessing a greater density (D) of material (M) at the edges (12a) than in the centre of it, wherein each of said single webs or sheet (12) is produced, with all its portions (12a, 12b) including those (12a), at the edges of the web or sheet, having a greater density (D, Dmax) of material (M), by a continuous spun bond type process, and
- joining said webs or sheets (12) together to form said article (11) along the respective edges (12a) possessing said greater density of material.

10. Process according to claim 9, wherein said greater density (D) at the edges (12a) of each web or sheet (12) is obtained by feeding a greater quantity of said material (M) per unit of time to the dies (19), suitable for drawing the filaments to form the web or sheet in said spunbond type process, which are arranged in correspondence with the edge zones (12a) of the sheet being formed, than to the dies which are arranged in correspondence with the central zone (12b) of the web or sheet.

11. Plant (15) implementing a spunbond type process for the production of a web (12) of non-woven, comprising a spinning station (18), in turn including a plurality of spinning or drawing heads (19) for the spinning of a plurality of filaments (22) of a given base material (M), and a moving conveyor belt (17) suitable for receiving from above said filaments (22) drawn by said spinning heads, so as to form the web (12) of non-woven, said plant being **characterized in that** it further comprises special feeding means (24) arranged for feeding in a unit of time the drawing heads (19) which are placed above the lateral edge areas (12a) of the web being formed, with a greater quantity of material than the drawing heads (19) placed above the central area (12b) of the web (12) being formed, placed on the moving conveyor belt (17).

## Patentansprüche

1. Mehrbahniger Vliesartikel (11), im besonderen für die Abdeckung von großen Flächen (26), bestehend aus:
einer Vielzahl von Bahnen oder Blätter (12) aus einem Vlies eines bestimmten Materials (M) zusammengefügt um gesagten Artikel (11) zu bilden,
wobei die Bahnen oder Blätter (12) eine größere Dichte (D, Dmax) des Materials (M) an den Rändern als in der Mitte des Bahnes oder Blattes (12) besitzen, und die Fugen (11a) zwischen den Bahnen oder Blätter (12), entlang gesagter Rändern (12a) gemacht werden,
und eine größere Dichte (D) des Materials haben,
**dadurch gekennzeichnet, dass** jeder der einzelnen Bahnen oder Blätter (12) mit dem gesagten Vliesartikel (11) mit allen seinen Teilen (12a, 12b) einschlisslich derjenigen (12a) an den Rändern des Bahnes oder Blattes, mit einer höheren Dichte (D, Dmax) des Materials (M) durch einen unablässigen Spunbondverfahren produziert wird, indem durch eine entsprechende Ziehenzone (18) und die Hinterlegung von oben auf ein Förderband (17), das in Bewegung (V) ist, eine Vielzahl von unablässigen Filamenten (22) des genannten Materials (M) und anschließend zur Festsetzung der Filamentenschicht so hinterlegt.

2. Vliesartikel (11) nach Anspruch 1, wobei die genannten Filamente (22) nach ihrer Hinterlegung von oben auf das genannte Förderband verursacht werden sowohl in der Längs (f2) und Querrichtung (f1) in Bezug auf die Richtung der Bewegung (V) des Förderbandes (17) bewegen, so dass sie sich gegenseitig überlagern und auf genannte Förderband (17) zufällig verteilten werden.

3. Vliesartikel (11) nach Anspruch 1 oder 2, wobei das gennante Material (M) ein Kunststoff oder ein Polymer ist.

4. Vliesartikel (11) nach Anspruch 3, wobei das gennante Material (M) Polypropylen ist.

5. Vliesartikel (11) nach einem der vorhergehenden Ansprüche, wobei die genannten Bahnen oder Blätter (12) ein auf dem anderen sich überlappen und zusammen an den jeweiligen Rand (12a) beigetreten werden, um eine, erweiterbare Konfiguration wie ein Akkordeon für genannten Artikel zu bilden.

6. Vliesartikel (11) nach einem der vorhergehenden Ansprüche, wobei die größere Dichte (Dmax) des Materials an den Ränder (12a) des einzelnen Bahnes oder Blattes (12) zwischen 20 und 35 gr/m2 ist und mindestens 30% größer als die (Dmin) in der Mitte (12b) des Bahnes (12) ist.

7. Vliesartikel nach einem der vorhergehenden Ansprüche, der durch verschiedenen Bahnen (12) produziert wird und wobei die Ränder (12', 12a) mit größerer Dichte des Materials durch Gießen einer feinen Schnur von geschmolzenem Material auf der Fügezone (12a) beigetreten gemacht werden.

8. Mehrbahniger Vliesartikel (11) nach einem der vorhergehenden Ansprüche, wobei die nicht beigetreten Extremität Ränder (11') des Artikels auch eine größere Dichte (D) des Materials (M) als in der Mitte der dazugehoerigen Bahnen oder Blätter (12) besitzen.

9. Verfahren zur Herstellung eines Mehrbahniger Vliesstoffartikels umfassend folgenden Schritten:
- Herstellung einer Vielzahl von Bahnen oder Blätter (12) aus Vliesstoff jeder eine größere Dichte (D) des Materials (M) an den Rändern (12a) als in der Mitte besitzt, wobei jedes der einzelnen Bahnen oder Blätter (12) mit allen ihren Teilen (12a, 12b), einschließlich derjenigen (12a), an den Rändern der Bahnen oder Blätter, mit einer höheren Dichte (D, Dmax) des Materials (M) durch ein unablässiges Spunbondverfahren hergestellt wird, und
- Anklebung der genannten Bahnen oder Blätter (12) entlang der dazugehoerigen Ränder (12a), die eine größere Dichte des Materials besitzten um das genannte Artikel (11) zu bilden.

10. Verfahren nach Anspruch 9, wobei die größere Dichte (D) an den Rändern (12a) der einzelnen Bahnen oder Blättern - durch eine größere Zuführung des genannten Materials (M) pro Zeiteinheit auf die SpinnKöpfe (19) erhalten wird, SpinnKöpfe geeignet zum Ziehen der Fäden an das Bahn oder Blatt waehrend genannten Spunbondverfahren , Filamenten, die in Korrespondenz mit den Ränder (12a) der in Bildung - Bahneszonen angeordnet sind, als der Köpfe, die in Korrespondenz mit dem ZentralZone (12b) des Bahnes oder Blattes angeordnet sind.

11. ProduktionsAnlage (15) durchführend ein Spunbondverfahren für die Herstellung von einem Netz (12) aus Vliesstoff, bestehend aus einem Spinnmaschine (18) die, wiederum eine Mehrzahl von Spinnen oder Zeichnungsköpfe (19) für das Spinnen von einer Vielzahl von Filamenten (22) eines bestimmten Grundmaterials (M) einschliesst, und einer beweglichen Förderband (17) geeignet für den Empfang von oben gesagter Filamenten (22) durch die Spinnerei, um das Bahn zu bilden (12), genannte Anlage für ferner spezielle Zuführungsmittel (24) kenngezeichnet ist, anfaellig für die Zuführung in der Zeiteinheit der Zeichnungsköpfen (19), die oben die seitlichen Randzone (12a) des laufenden Vlies platziert sind, mit einer größeren Menge des Materials als die Zeichnungsköpfen (19) die über dem zentrale zone (12b) des laufenden Vlies (12), das auf dem beweglichen Förderband (17) platziert wird.

## Revendications

1. Article non tissé (11) du type à bandes multiples, en particulier pour couvrir des zones (26) à grande surface, comprenant:
une pluralité de bandes ou de voiles (12), d'un non-tissé d'un matériel (M) donné, joints ensemble pour former ledit article,
lesdites bandes ou voiles (12) possédant une plus grande densité (D, Dmax) de matériel (M) sur les bords (12a) que dans le centre de la bande ou du voile (12), et les jointures (11a) entre ces bandes ou voiles étant réalisées le long desdits bords (12a) qui ont ladite plus grande densité (D) de matériel,
**caractérisé en ce que** chacune des bandes ou voiles (12), dont ledit article non tissé (11) est réalisé, est produite avec toutes ses parties (12a, 12b), y comprises celles (12a) qui sont le long des bords de la bande ou du voile et qui ont une plus grande densité (D, Dmax) du matériel (M), par un procédé de type spunbond continu, en étirant sur un banc d'étirage (18) correspondant et en déposant d'en haut sur un tapis transporteur (17) qui est en mouvement (V) une pluralité de filaments continus (22) dudit matériel (M), et en suite par le fixage de la couche de filaments ainsi déposés.

2. Article non tissé (11) selon la revendication 1', dans lequel lesdits filaments (22) comme ils sont déposés par le haut sur ledit tapis transporteur sont amenés à se déplacer dans les directions longitudinale (f2) et transversale (f1) par rapport à la direction du mouvement (V) dudit tapis transporteur (17), de sorte qu'ils se superposent mutuellement et sont distribués par hasard sur ledit tapis transporteur (17).

3. Article non tissé (11) selon la revendication 1 ou 2, dans lequel ledit matériel (M) est une résine ou un polymère.

4. Article non tissé 11) selon la revendication 3, dans lequel ledit matériel (M) est en polypropylène

5. Article non tissé (11) selon l'une quelconque des revendications précédentes, dans lequel lesdites bandes ou voiles (12) se superposent l'un sur l'autre et sont jointes entre eux le long des bords (12a) respectifs, de manière qu'ils forment une configuration extensible, comme un accordéon, pour ledit article.

6. Article non tissé (11) selon l'une quelconque des revendications précédentes, dans lequel la plus grande densité du matériel (Dmax) sur les bords (12a) de chaque bande ou voile (12) est comprise entre 20 et 35 gr/m2 et est au moins 30% supérieure à celle (Dmin) dans le centre de la bande ou voile.

7. Article non tissé (11) selon l'une quelconque des revendications précédentes, dans lequel les bords (12', 12a), avec une plus grande densité du matériel, des bandes ou des voiles (12) différentes dont l'article non tissé est fait, sont jointes par un cordon de matériau fondu sur la zone de jonction (12a).

8. Article non tissé (11) du type à bandes multiples selon l'une quelconque des revendications précédentes, dans lequel les bords (11') qui sont le long des extrémités de l'article et qui ne sont pas jointes, ont aussi une plus grande densité (D) de matériel (M) que dans le centre de la bande ou voile (12) relatif.

9. Procédé de fabrication d'un article non tissé à bandes multiples (11) comprenant les étapes suivantes:
- produire une pluralité de bandes ou de voiles (12) de non-tissé dont chacun possède une plus grande densité (D) de matériel sur les bords (12a) qu'au centre de celui-ci, dans lequel chacune desdites bandes ou voiles (12) est produite, avec toutes ses parties (12a,12b) y comprises celles (12a), le long des bords de la bande ou du voile, qui ont une plus grande densité (D, Dmax) du matériel (M), par un procédé continu du type spunbond, et
- joindre lesdites bandes ou voiles (12), pour former ledit article (11), le long des bords respectifs (12a) qui possèdent ladite plus grande densité du matériel.

10. Procédé selon la revendication 9, dans lequel ladite plus grande densité (D) du matériel le long les bords (12a) de chaque bande ou voile (12) est obtenue par l'alimentation d'une plus grande quantité dudit matériel par unité de temps aux têtes de filature (19) qui étire les filaments pour former la bande ou voile dans ledit procédé continu du type spunbond et qui sont disposées en correspondance avec les zones des bords (12a) de la bande ou du voile en formation, que aux têtes qui sont disposées en correspondance avec la zone centrale (12b) de la bande ou du voile.

11. Ligne de production pour la mise en oeuvre d'un procédé de type spunbond pour la fabrication d'une bande (12) de non-tissé, comprenant une banc de filature, à son tour comprenant une pluralité de têtes de filature (19) pour la filature d'une pluralité de filaments (22) d'un matériel de base donné (M), et un tapis transporteur (17) fait pour la réception par le haut desdits filaments (22) étirés par lesdites têtes de filature de façon qu'ils forment la bande de non tissé (12), ladite ligne de production étant **caractérisée en ce qu'**elle comprend en outre des moyens (24) d'alimentation spéciale pour l'alimentation dans une unité de temps aux têtes de filature (19) qui sont placées au-dessus des zones latérales de bordure (12a) de la bande en formation, avec une plus grande quantité de matériel que aux têtes de filatures (19) qui sont placées au-dessus de la zone centrale (12b) de la bande (12) en formation placée sur le tapis transporteur (17).
